# EUROPÄISCHE PATENTSCHRIFT

(11) **EP 2 920 389 B1**
(45) Veröffentlichungstag und Bekanntmachung des Hinweises auf die Patenterteilung: **22.11.2017**
(21) Anmeldenummer: 13776942.8
(22) Anmeldetag: 17.08.2013
(51) Int. Cl.: E05B 81/90, E05B 81/16, E05B 81/06, E05B 81/36

(54) **KRAFTFAHRZEUGTÜR**
MOTOR VEHICLE DOOR
PORTIÈRE POUR VÉHICULE AUTOMOBILE

(30) Priorität: 28.08.2012 DE 102012008326
(43) Veröffentlichungstag der Anmeldung: 23.09.2015
(73) Patentinhaber: Kiekert Aktiengesellschaft, 42579 Heiligenhaus (DE)
(72) Erfinder: MITTELBACH, Stephan, 42551 Velbert (DE)
(86) Internationale Anmeldenummer: PCT/DE2013/000478
(87) Internationale Veröffentlichungsnummer: WO 2014/032641

(56) Entgegenhaltungen:
- EP-A1- 0 903 457
- EP-A2- 2 105 559
- GB-A- 2 379 713
- US-A1- 2007 138 802
- US-A1- 2010 072 761

## Beschreibung

Die Erfindung betrifft eine Kraftfahrzeugtür, mit einem Kraftfahrzeugtürschloss, ferner mit einem von einer Türaußenseite her zugänglichen sowie beaufschlagbaren Manipulationselement, und mit einer durch einen Motor über ein oder mehrere Abtriebselemente angetriebenen Sicherungseinheit im Kraftfahrzeugtürschloss, wobei die Sicherungseinheit motorisch und gegebenenfalls manuell über das Manipulationselement in wenigstens die Positionen "gesichert" und "entsichert" steuerbar ist.

DE 10 2009 001 851 A1 beschreibt eine Kraftfahrzeugtür, bei der die Sicherungseinheit als Verriegelungseinheit ausgelegt ist. Bei dem Manipulationselement handelt es sich um ein Betätigungselement einer Notverriegelungseinrichtung, welches als Notverriegelungsschaltnuss ausgelegt ist. Die Notverriegelungsschaltnuss ist an der Kraftfahrzeugtür von außen verdeckt angeordnet, und zwar derart, dass an ihrer Lage von außen nicht zu erkennen ist, ob die betreffende Kraftfahrzeugtür ohne Weiteres von außen geöffnet werden kann oder nicht.

Beim Ausfall einer Zentralverriegelungseinrichtung bzw. der motorisch verstellbaren Sicherungseinheit kann die Notverriegelungsschaltnuss in eine Sperrstellung überführt werden. Diese korrespondiert zu der Position "gesichert" bzw. zur Stellung "verriegelt" der bekannten Zentralverriegelungseinrichtung nach der DE 10 2009 001 851 A1. Dadurch ist die beschriebene Notverriegelung möglich und lässt sich realisieren, und zwar besonders für den Fall, dass das übliche Verriegelungssystem nicht funktionsfähig ist und folglich das entsprechende Fahrzeug nicht diebstahlsicher verriegelt werden kann. Derartige Notfälle im Zentralverriegelungssystem können beispielsweise dann auftreten, wenn eine Fahrzeugbatterie entladen ist oder keine ausreichende Spannung mehr erzeugt, um das typischerweise elektrisch erzeugte Ver- und Entriegeln mit Hilfe des Elektromotors zu bewirken.

Zu diesem Zweck ist das bekannte Manipulationselement als Notverriegelungsschaltnuss ausgelegt und an das Lager einer zugehörigen Außenverriegelungsschaltnuss angebunden. Auf diese Weise kann die Außenverriegelungsschaltnuss und folglich die Verriegelungseinheit bzw. Sicherungseinheit mit Hilfe des Manipulationselementes manuell in die Position "gesichert" bzw. "verriegelt" überführt werden.

Bei einem Schloss mit Zentralverriegelungseinrichtung entsprechend der DE 41 08 561 C2 ist ein Drehkörper an der Kraftfahrzeugtür vorgesehen. Nach Ausfall der Zentralverriegelungseinrichtung ermöglicht der Drehkörper ein mechanisches Verstellen eines Sicherungshebels in die Sicherungsstellung. Auf diese Weise ist die eingeschwenkte Kraftfahrzeugtür von außen verschlossen.

Mit einer vergleichbaren Notverriegelungseinrichtung befasst sich auch das Gebrauchsmuster DE 203 12 347 U1 der Anmelderin. Hier ist eine mit Hilfe einer Abdeckung temporär verschließbare Gehäuseöffnung zum Einführen eines externen Manipulationswerkzeuges vorgesehen. Mit Hilfe dieses Manipulationswerkzeuges lässt sich der im Gehäuse gelagerte Verriegelungshebel in eine Verriegelungsstellung überführen. Hierdurch soll eine sichere Funktionsweise über das gesamte Autoleben gewährleistet werden.

Der Stand der Technik kann nicht in allen Aspekten zufriedenstellen. So arbeitet das Manipulationselement regelmäßig über einen oder mehrere Hebel auf die Sicherungseinheit bzw. beaufschlagt einen oder mehrere Hebel der Sicherungseinheit im Innern des Kraftfahrzeugtürschlosses. Das setzt typischerweise voraus, dass Bewegungen des Manipulationselementes umgelenkt werden müssen. Dadurch entstehen nicht nur Reibungsverluste, sondern ergibt sich zudem ein relativ komplexer Aufbau. Außerdem sind zusätzliche Elemente erforderlich, die gegebenenfalls die Funktionssicherheit über lange Zeitskalen gesehen beeinträchtigen oder beeinträchtigen können, zumindest jedoch nicht unerhebliche Kosten verursachen. Hier setzt die Erfindung ein.

GB 2 379 713 A beschreibt eine Kraftfahrzeugtür gemäß dem Oberbegriff des Anspruchs 1. Diese bekannte Kraftfahrzeugtür umfasst ein Manipulationselement und ein Abtriebselement, bei dem es sich um eine Abtriebsscheibe handelt, die auf ihrer Umfangsfläche eine Außenverzahnung aufweist. Diese Außenverzahnung läuft auf einem Kreisbogen von ca. 30° um die Drehachse der Abtriebsscheibe. Das Manipulationselement und das Abtriebselement sind einstückig ausgebildet. An einem an das Abtriebselement angrenzenden Bereich des Manipulationselements ist eine radial vorspringende Nase ausgebildet. Diese Nase ist in einem Bereich ausgebildet, der ca. 90° um die Drehachse der Abtriebsscheibe von der Außenverzahnung entfernt ist.

Vor diesem Hintergrund schlägt die Erfindung den Gegenstand des unabhängigen Anspruchs vor. Vorteilhafte Ausführungsformen der Erfindung sind in den abhängigen Ansprüchen beschrieben.

Die Erfindung schlägt eine Kraftfahrzeugtür vor, mit
- einem Kraftfahrzeugtürschloss,
- einem von einer Türaußenseite her zugänglichen sowie beaufschlagbaren Manipulationselement,
- einer durch einen Motor über ein oder mehrere Abtriebselemente angetriebenen Sicherungseinheit im Kraftfahrzeugtürschloss,
wobei
- die Sicherungseinheit motorisch und gegebenenfalls manuell über das Manipulationselement in wenigstens die Positionen "gesichert" und "entsichert" steuerbar ist,
- das Manipulationselement an zumindest ein Abtriebselement des Motors angeschlossen ist;
- das Manipulationselement und das Abtriebselement einstückig ausgebildet sind;
- das Manipulationselement in einer Öffnung eines Türschlossgehäuses gelagert ist;
- das Manipulationselement zylindrisch und die Öffnung als korrespondierende zylindrische Öffnung ausgebildet ist;
- an einem an das Abtriebselement angrenzenden Bereich des Manipulationselements eine radial vorspringende Nase ausgebildet ist;
- es sich bei dem Abtriebselement um eine Abtriebsscheibe handelt, die eine Außenverzahnung aufweist;
- die Nase im Bereich der Außenverzahnung ausgebildet ist.

Die Erfindung ermöglicht eine Kraftfahrzeugtür, bei der eine manuelle Beaufschlagung der Sicherungseinheit mit erhöhter Funktionssicherheit und verringertem baulichen Aufwand sowie folglich reduzierten Kosten einhergeht.

Erfindungsgemäß sind das Manipulationselement und das Abtriebselement einstückig ausgebildet. Dabei hat es sich zusammenfassend bewährt, wenn das Manipulationselement und das Abtriebselement eine Baueinheit aus beispielsweise Kunststoff definieren. Eine solche Baueinheit aus Kunststoff lässt sich besonders einfach und kostengünstig realisieren, so dass mit dem Manipulationselement verbundene Kosten praktisch nicht ins Gewicht fallen im Vergleich zu einer Kraftfahrzeugtür ohne ein solches Manipulationselement.

Neben der beschriebenen Kostenersparnis wird auch eine Steigerung der Funktionssicherheit erreicht. Denn das Manipulationselement und das Abtriebselement sind vorteilhaft als Baueinheit ausgelegt, so dass eine manuelle Beaufschlagung des Manipulationselementes unmittelbar das Abtriebselement in gewünschter Art und Weise beaufschlagt. Auf diese Weise kann das Manipulationselement direkt in den Abtriebsstrang des Motors der Sicherungseinheit eingreifen und die Funktion des Motors gleichsam ersetzen.

Hierbei geht die Erfindung von der Erkenntnis aus, dass es sich bei dem Motor typischerweise um einen Elektromotor handelt, der über keine allzu große Selbsthemmung verfügt. Folglich kann das Manipulationselement problemlos dazu genutzt werden, die Funktion des Motors gleichsam zu übernehmen oder darzustellen, indem mit Hilfe des Manipulationselementes das Abtriebselement entsprechend beaufschlagt wird, um die gewünschte Position der Sicherungseinheit darstellen zu können.

Im Regelfall handelt es sich bei der Sicherungseinheit um eine Verriegelungseinheit. Folgerichtig wird das an das Abtriebselement angeschlossene Manipulationselement meistens dazu genutzt, die Verriegelungseinheit in die Position "verriegelt" zu überführen. Das gilt besonders für den Fall, dass die Verriegelungseinheit bzw. dessen Motor ausgefallen ist. Bei der Verriegelungseinheit handelt es sich typischerweise um eine Zentralverriegelungseinheit.

Im Einzelnen ist zu diesem Zweck das Manipulationselement als Schaltnuss mit Betätigungsschlitz ausgelegt. Das heißt, das Manipulationselement bzw. die Schaltnuss lässt sich wenigstens in die Funktionsstellungen "verriegelt" oder "entriegelt" überführen, sofern es sich bei der Sicherungseinheit um die bevorzugte Verriegelungseinheit handelt. Grundsätzlich kann die Sicherungseinheit alternativ aber auch beispielsweise als Diebstahlsicherungseinheit ausgelegt sein. In jedem Fall lässt sich mit Hilfe des Manipulationselementes das Abtriebselement des Motors und folglich die Sicherungseinheit insgesamt so beaufschlagen, dass diese beispielsweise die Funktion "gesichert" einnimmt. Als Folge hiervon kann die zugehörige Kraftfahrzeugtür im Regelfall nicht geöffnet werden.

Das Manipulationselement ist erfindungsgemäß in einer Öffnung eines Türschlossgehäuses gelagert. Bei dem Türschlossgehäuse handelt es sich im Regelfall um ein solches aus Kunststoff. Da das Manipulationselement und das Abtriebselement vorteilhaft einstückig aus Kunststoff ausgebildet sind und eine Baueinheit aus eben diesem Kunststoff definieren, werden an dieser Stelle geringe Reibzahlen beobachtet, nämlich im Sinne von "Kunststoff-Kunststoff". Das trägt ergänzend zur Funktionssicherheit und einfachen Bedienung bei.

In diesem Zusammenhang hat es sich weiter erfindungsgemäß bewährt, wenn das Manipulationselement zylindrisch und die bereits beschriebene Öffnung im Türschlossgehäuse als korrespondierende zylindrische Öffnung ausgebildet ist. Auf diese Weise reicht es aus, das Manipulationselement schlicht und ergreifend in die Öffnung einzustecken. Außerdem steht das Manipulationselement im Allgemeinen auf der Abtriebsscheibe bzw. allgemein dem Abtriebselement auf. Ferner ist das Manipulationselement meistens zentral im Vergleich zur Abtriebsscheibe angeordnet, so dass das Manipulationselement unmittelbar die Abtriebsscheibe zentrisch beaufschlagt und auch beaufschlagen kann.

Wie bereits erläutert, handelt es sich bei dem Abtriebselement erfindungsgemäß um eine Abtriebsscheibe. Die Abtriebsscheibe kämmt im Allgemeinen mit einem an eine Abriebswelle des Motors angeschlossenen Schneckenrad. Da der Motor regelmäßig als Elektromotor ausgelegt ist und folglich über relativ geringe Selbsthemmungskräfte verfügt, kann mit Hilfe des Manipulationselementes die Abtriebscheibe unschwer in die Position "gesichert" (und auch "entsichert") überführt werden. Bei diesem Vorgang wird der Motor bzw. Elektromotor mitgenommen.

Die Position "gesichert" der Sicherungseinheit bzw. nach vorteilhafter Ausgestaltung der Verriegelungseinheit korrespondiert bevorzugt zur Stellung "verriegelt". Diese Stellung "verriegelt" der Kraftfahrzeugtür lässt sich besonders einfach und zielgenau dann umsetzen, wenn die Abtriebsscheibe auf ein Außenverriegelungselement und/oder Innenverriegelungselement arbeitet. Im Regelfall verschwenkt die Abtriebsscheibe das Außenverriegelungselement bzw. den Außenverriegelungshebel, und zwar in eine Position, bei welcher Beaufschlagungen eines zugehörigen Türaußengriffes leer gehen. Das ist die übliche Funktionalität in der Stellung "verriegelt" der Verriegelungseinheit.

Im Ergebnis wird eine Kraftfahrzeugtür zur Verfügung gestellt, die mit einem einfach aufgebauten und besonders funktionssicheren Manipulationselement ausgerüstet ist. Das Manipulationselement ist von der Außenseite her zugänglich und lässt sich manuell beaufschlagen, beispielsweise in dem ein Schraubendreher, ein Schlüsselbart oder ein vergleichbares Manipulationswerkzeug in eine Nut bzw. den Betätigungsschlitz der Schaltnuss eingesteckt wird. Grundsätzlich kann das Manipulationselement aber auch mit einem Griffknopf mit Riffelung oder dergleichen ausgerüstet werden. In jedem Fall lässt sich anhand der Lage des von außen her zugänglichen Manipulationselementes nicht auf die Stellung der Sicherungseinheit im Innern des Kraftfahrzeugtürschlosses rückschließen, wie dies allgemein für solche Notverriegelungseinrichtungen der Fall ist.

Im Folgenden wird die Erfindung anhand einer lediglich ein Ausführungsbeispiel darstellenden Zeichnung näher erläutert; es zeigen:
- **Fig. 1 und 2**: die Kraftfahrzeugtür mit dem daran angebrachten Kraftfahrzeugtürschloss in verschiedenen Einbausituationen in einer Frontansicht und
- **Fig. 3**: das Kraftfahrzeugtürschloss nach den Fig. 1 und 2 in einer Rückansicht bei geöffnetem Gehäuse.

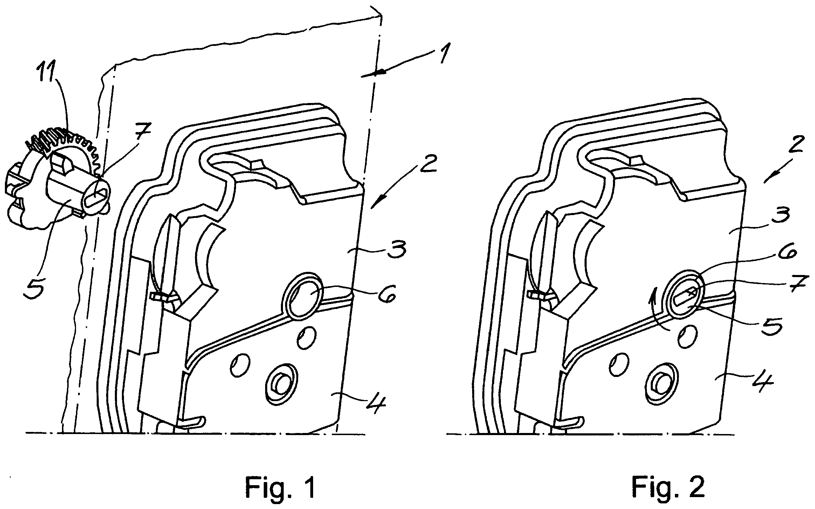

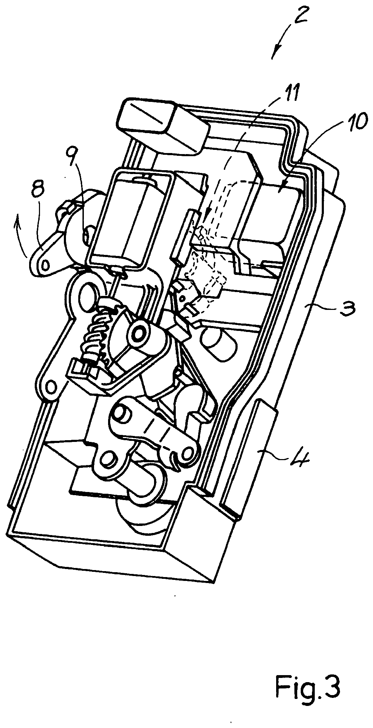

In den Figuren ist eine Kraftfahrzeugtür dargestellt, die lediglich in der Fig. 1 angedeutet wird und sich hier anhand einer Stirnseite 1 der betreffenden Kraftfahrzeugtür manifestiert. Im Inneren der Kraftfahrzeugtür ist ein Kraftfahrzeugtürschloss 2 angeordnet, von dem man in den Fig. 1 und 2 primär ein Kraftfahrzeug-Türschlossgehäuse 3 und einen Schlosskasten 4 üblicher Funktionalität erkennt. In der Fig. 3 ist das geöffnete Kraftfahrzeug-Türschlossgehäuse 3 aus Kunststoff mit abgenommener Haube dargestellt. Im Unterschied zum Kraftfahrzeug-Türschlossgehäuse 3 ist der Schlosskasten 4 aus Metall gefertigt.

Zum weiteren wesentlichen Aufbau gehört ferner ein von einer Türaußenseite her zugängliches sowie beaufschlagbares Manipulationselement 5. Anhand der Darstellungen insbesondere in den Fig. 1 und 2 erkennt man, dass das Manipulationselement 5 vorliegend zylindrisch ausgebildet und in eine korrespondierende zylindrische Öffnung 6 im Kraftfahrzeugtürschlossgehäuse 3 aus Kunststoff eingreift.

Bei dem Manipulationselement 5 handelt es sich vorliegend um eine Schaltnuss 5, die mit einem Schlitz bzw. Betätigungsschlitz 7 zum Eingriff eines nicht dargestellten Manipulationswerkzeuges ausgerüstet ist. Bei diesem Manipulationswerkzeug kann es sich um einen Schraubendreher, einen Schlüsselbart eines Kraftfahrzeugtürschlüssels etc. handeln. Mit Hilfe dieses Manipulationswerkzeuges lässt sich das Manipulationselement bzw. die Schaltnuss 5 von der in der Fig. 2 gezeigten Stellung "entsichert" in eine Position "gesichert" verschwenken, die im Ausführungsbeispiel zu einer Drehung im Uhrzeigersinn unter Berücksichtigung etwa eines Viertelkreises korrespondiert, wie ein dortiger Pfeil andeutet.

Die hierdurch eingenommene Stellung "gesichert" des Manipulationselementes 5 führt dazu, dass ein lediglich in der Fig. 3 angedeuteter Verriegelungshebel 8 um seine Achse 9 in der in Fig. 3 eingezeichneten Pfeilrichtung verschwenkt wird. Als Folge hiervon wird eine zugehörige Verriegelungshebelkette unterbrochen. Bei dem Verriegelungshebel 8 mag es sich entsprechend dem dargestellten Beispiel um einen Außenverriegelungshebel handeln, so dass dann die Außenverriegelungshebelkette unterbrochen ist und ein nicht dargestellter Türaußengriff leer geht, wie dies im einleitend bereits in Bezug genommenen Stand der Technik beispielsweise nach der DE 10 2009 001 851 A1 oder auch entsprechend der DE 41 08 561 C2 bzw. der DE 203 12 347 U1 im Detail erläutert wird.

In diesem Fall fungiert eine durch einen Motor 10 über ein Abtriebselement 11 angetriebene Sicherungseinheit 8, 10, 11 als Verriegelungseinheit 8, 10, 11. Das ist selbstverständlich nur beispielhaft und nicht einschränkend zu verstehen. Denn genauso gut könnte es sich bei dem Verriegelungshebel 8 auch um einen Innenverriegelungshebel handeln, so dass in diesem Fall die Sicherungseinheit 8, 10, 11 die Funktion einer Diebstahlsicherungseinheit übernimmt oder übernehmen kann. Das ist jedoch nicht dargestellt.

Die Sicherungseinheit bzw. Verriegelungseinheit 8, 10, 11 lässt sich motorisch mit Hilfe des Motors bzw. Elektromotors 10 in die bereits besprochenen Funktionen "gesichert" und "entsichert" steuern. In vergleichbarer Weise sorgt hierfür alternativ oder zusätzlich das Manipulationselement 5, wie noch weiter im Detail erläutert wird. Im Falle der Verriegelungseinheit 8, 10, 11 korrespondiert die Position "gesichert" zur Stellung "verriegelt", wohingegen die Funktionsstellung "entsichert" mit der Position "entriegelt" korrespondiert. Neben der beschriebenen motorischen Verstellung kann die Sicherungseinheit 8, 10, 11 auch manuell über das Manipulationselement 5 in die beschriebenen Positionen gesteuert werden.

Zu diesem Zweck ist das Manipulationselement 5 erfindungsgemäß an das Abtriebselement 11 des Motors 10 angeschlossen. Grundsätzlich können auch mehrere Abtriebselemente realisiert sein. In diesem Fall mag auch das Manipulationselement 5 an diese mehreren Abtriebselemente angeschlossen werden. Im Rahmen des Ausführungsbeispiels ist das Manipulationselement 5 jedoch an das eine (einzige) Abtriebselement 11 des Motors 10 angeschlossen. Dabei sind das Manipulationselement 5 und das betreffende Abtriebselement 11 vorliegend einstückig ausgebildet. Tatsächlich handelt es sich bei dem Manipulationselement 5 und dem Abtriebselement 11 um eine Baueinheit 5, 11 aus Kunststoff.

Das heißt, das Manipulationselement 5 und das Abtriebselement 11 können in einem Zug und in einem gemeinsamen Herstellungsvorgang aus einem gemeinsamen Kunststoff in einem Zug produziert werden, was die Kosten besonders niedrig hält. Im Übrigen sorgt die Auslegung der Baueinheit 5, 11 aus Kunststoff dafür, das etwaige Reibungen zwischen dem zylindrischen Manipulationselement 5 und der das Manipulationselement 5 aufnehmenden Öffnung 6 im Türschlossgehäuse bzw. Kraftfahrzeug-Türschlossgehäuse 3 ebenfalls aus Kunststoff besonders niedrig sind.

Anhand einer vergleichenden Betrachtung der Fig. 1 und 2 erkennt man, dass es sich bei dem Abtriebselement 11 um eine Abtriebsscheibe 11 handelt. Die Abtriebsscheibe 11 bzw. das Abtriebselement 11 kämmt mit einem nicht ausdrücklich dargestellten Schneckenrad, welches an eine ebenfalls nicht explizit gezeigte Abtriebswelle des Motors 10 angeschlossen ist.

Außerdem erkennt man anhand der Fig. 1 und 2, dass das zylindrisch ausgelegte Manipulationselement 5 auf dem Abtriebselement bzw. vorteilhaft der Abtriebsscheibe 11 aufsteht. Tatsächlich weist das Manipulationselement 5 im Vergleich zur Abtriebsscheibe 11 eine zentrale Anordnung auf. Auf diese Weise kann ein Bediener mit Hilfe des nicht dargestellten und in den Schlitz bzw. Betätigungsschlitz 7 eingreifenden Manipulationswerkzeuges die Abtriebsscheibe 11 in gleicher Weise verstellen, als ob diese mit Hilfe des Motors 10 beaufschlagt würde. Das heißt, das Manipulationselement 5 bzw. dessen Beaufschlagung simuliert letztlich eine motorische Bewegung des Abtriebselementes bzw. der Abtriebsscheibe 11, und zwar regelmäßig für den Fall, dass der Motor bzw. Elektromotor 10 ausgefallen ist oder nicht in der Lage ist, die Abtriebsscheibe 11 in die gewünschte Position zu überführen.

## Patentansprüche

1. Kraftfahrzeugtür, mit
• einem Kraftfahrzeugtürschloss (2),
• einem von einer Türaußenseite her zugänglichen sowie beaufschlagbaren Manipulationselement (5),
• einer durch einen Motor (10) über ein oder mehrere Abtriebselemente (11) angetriebenen Sicherungseinheit (8, 10, 11) im Kraftfahrzeugtürschloss (2),
wobei
• die Sicherungseinheit (8, 10, 11) motorisch und gegebenenfalls manuell über das Manipulationselement (5) in wenigstens die Positionen "gesichert" und "entsichert" steuerbar ist,
• das Manipulationselement (5) an zumindest ein Abtriebselement (11) des Motors (10) angeschlossen ist;
• das Manipulationselement (5) und das Abtriebselement (11) einstückig ausgebildet sind;
• das Manipulationselement (5) in einer Öffnung (6) eines Türschlossgehäuses (3) gelagert ist;
• das Manipulationselement (5) zylindrisch und die Öffnung (6) als korrespondierende zylindrische Öffnung (6) ausgebildet ist;
• an einem an das Abtriebselement (11) angrenzenden Bereich des Manipulationselements (5) eine radial vorspringende Nase ausgebildet ist;
• es sich bei dem Abtriebselement (11) um eine Abtriebsscheibe (11) handelt, die eine Außenverzahnung aufweist;
**dadurch gekennzeichnet, dass**
• die Nase im Bereich der Außenverzahnung ausgebildet ist.

2. Kraftfahrzeugtür nach Anspruch 1, **dadurch gekennzeichnet, dass**
• es sich bei dem Manipulationselement (5) und dem Abtriebselement (11) um eine Baueinheit (5, 11) aus vorzugsweise Kunststoff handelt.

3. Kraftfahrzeugtür nach einem der vorigen Ansprüche, **dadurch gekennzeichnet, dass**
• das Manipulationselement (5) als Schaltnuss (5) mit Betätigungsschlitz (7) ausgelegt ist.

4. Kraftfahrzeugtür nach dem vorigen Anspruch, **dadurch gekennzeichnet, dass**
• die Abtriebsscheibe (11) mit einem an eine Abtriebswelle des Motors (10) angeschlossen Schneckenrad kämmt.

5. Kraftfahrzeugtür nach einem der vorigen Ansprüche, **dadurch gekennzeichnet, dass**
• das Manipulationselement (5) auf dem Abtriebselement (11) vorzugsweise senkrecht aufsteht.

6. Kraftfahrzeugtür nach dem vorigen Anspruch, **dadurch gekennzeichnet, dass**
• das Manipulationselement (5) zentral im Vergleich zum Abtriebselement (11) angeordnet ist.

7. Kraftfahrzeugtür nach einem der vorigen Ansprüche, **dadurch gekennzeichnet, dass**
• die Sicherungseinheit (8, 10, 11) als Verriegelungseinheit (8, 10, 11) ausgebildet ist.

8. Kraftfahrzeugtür nach einem der vorigen Ansprüche, **dadurch gekennzeichnet, dass**
• das Abtriebselement (11) auf ein Außenverriegelungselement (8) und/oder Innenverriegelungselement arbeitet.

## Claims

1. Motor vehicle door, with
• a motor vehicle door latch (2),
• a manipulation element (5), being accessible and being able to be acted on from the outside of a door,
• a securing element (8, 10, 11) in the motor vehicle door latch (2) driven by a motor (10) by means of one or several output elements (11),
whereby
• the securing unit (8, 10, 11) can be controlled in a motorized manner and, if applicable, manually by means of the manipulation element (5) in at least the "secured" and "unsecured" positions,
• the manipulation element (5) is connected to at least an output element (11) of the motor (10);
• the manipulation element (5) and the output element (11) are formed as a single component;
• the manipulation element (5) is accommodated in an opening (6) of a door latch housing (3);
• the manipulation element (5) is formed cylindrically and the opening (6) is formed as a corresponding cylindrical opening (6);
• a radially protruding nose is formed on an area of the manipulation element (5) adjacent to the output element (11);
• the output element (11) is an output disk (11) which has external interlocking;
**characterized in that**
• the nose is formed in the area of the external interlocking.

2. Motor vehicle door according to Claim 1, **characterized in that**
• the manipulation element (5) and the output element (11) is a constructional unit (5, 11) preferably made of plastic.

3. Motor vehicle door according to one of the previous claims, **characterized in that**
- the manipulation element (5) is configured as a switching nut (5) with an activation slot (7).

4. Motor vehicle door according to the previous claim, **characterized in that**
• the outlet disk (11) combs with a wormgear connected to a pinion shaft of the motor (10).

5. Motor vehicle door according to one of the previous claims, **characterized in that**
• the manipulation element (5) preferably rises vertically on the outlet element (11).

6. Motor vehicle door according to the previous claim, **characterized in that**
• the manipulation element (5) is arranged centrally compared to the outlet element (11).

7. Motor vehicle door according to one of the previous claims, **characterized in that**
• the securing unit (8, 10, 11) is formed as a bolting unit (8, 10, 11).

8. Motor vehicle door according to one of the previous claims, **characterized in that**
• the output element (11) works on an external bolting element (8) and/or internal bolting element.

## Revendications

1. Portière de véhicule automobile équipée
• d'une serrure de portière de véhicule automobile (2),
• d'un élément de manipulation (5) accessible et pouvant être sollicité à partir du côté extérieur de la portière,
• d'une unité de sécurité (8, 10, 11) entraînée par un moteur (10) via un ou plusieurs élément d'entraînement (11) dans la serrure de portière de véhicule automobile (2) ,
• l'unité de sécurité (8, 10, 11) étant commandable par moteur et le cas échéant manuellement par l'élément de manipulation (5) dans au moins les position « sécurisée » et « désécurisée »,
• l'élément de manipulation (5) étant connecté à au moins un élément d'entraînement (11) du moteur (10);
• l'élément de manipulation (5) et l'élément d'entraînement (11) étant formés en une seule pièce;
• l'élément de manipulation (5) étant logé dans une ouverture (6) d'un boîtier de serrure (3) ;
• l'élément de manipulation (5) ayant une forme cylindrique et l'ouverture (6) étant formée comme ouverture cylindrique correspondante ;
• à l'une des zones jouxtant l'élément d'entraînement (11) de l'élément de manipulation (5), un taquet saillant radialement étant formé;
• l'élément d'entraînement (11) étant une rondelle de frottement (11) qui présente une denture extérieure;
**caractérisée en ce que**
• le taquet est formé dans la zone de la denture extérieure.

2. Portière de véhicule automobile selon la revendication 1 **caractérisée en ce que**
• l'élément de manipulation (5) et l'élément d'entraînement (11) sont une unité de construction (5, 11) de préférence en plastique.

3. Portière de véhicule automobile selon l'une des revendications précédentes **caractérisée en ce que**
• l'élément de manipulation (5) est dimensionné comme noix de contact (5) avec une fente d'actionnement (7).

4. Portière de véhicule automobile selon la revendication précédente **caractérisée en ce que**
• la rondelle d'entraînement (11) s'engrène à une roue à vis sans fin reliée à un arbre d'entraînement du moteur (10).

5. Portière de véhicule automobile selon l'une des revendications précédentes **caractérisée en ce que**
• l'élément de manipulation (5) pose de préférence verticalement sur l'élément d'entraînement.

6. Portière de véhicule automobile selon la revendication précédente **caractérisée en ce que**
• l'élément de manipulation (5) est disposé centralement par rapport à l'élément d'entraînement (11).

7. Portière de véhicule automobile selon l'une des revendications précédentes **caractérisée en ce que**
• l'unité de sécurité (8, 10, 11) est formée comme unité de verrouillage (8, 10, 11).

8. Portière de véhicule automobile selon l'une des revendications précédentes **caractérisée en ce que**
• l'élément d'entraînement (11) agit sur un élément de verrouillage extérieur (8) et/ou un élément de verrouillage intérieur.
